# EUROPEAN PATENT APPLICATION

(11) **EP 2 741 125 A1**
(43) Date of publication of application: **11.06.2014**
(21) Application number: 12820608.3
(22) Date of filing: 12.06.2012
(51) Int. Cl.: G02F 1/1333, G09F 9/00

(54) **LIQUID CRYSTAL MODULE**

(30) Priority: 01.08.2011 JP 2011168695
(71) Applicant: Funai Electric Co., Ltd., Daito-shi Osaka 574-0013 (JP)
(72) Inventor: KAWADA, Kazuaki, Daito-shi Osaka 574-0013 (JP)
(74) Representative: Grünecker, Kinkeldey, Stockmair & Schwanhäusser
(86) International application number: PCT/JP2012/064968
(87) International publication number: WO 2013/018442

(57) **Abstract**

In the present invention, a liquid crystal module is provided with a box-shaped rear frame (1), a back light unit disposed inside of the rear frame (1), a liquid crystal display panel (7) disposed above the back light, and a panel support part (1b) that is formed by bending the upper part of a lateral wall (1a) of the rear frame (1) inward, and that supports the end edges of the liquid crystal display panel (7).

## Description

### Technical Field

The present invention relates to a liquid crystal module that is built in television sets, personal computers and other electronic apparatuses.

### Background Art

As a liquid crystal module built in recent liquid crystal television sets and the like, a typical liquid crystal module has a structure in which a mold frame is disposed around a backlight unit disposed in an inside of a rear frame and an edge of a liquid crystal display panel is placed on this mold frame. In the meantime, it is general that the rear frame is formed of a sheet metal and the mold frame is formed of a synthetic resin.

On the other hand, a display apparatus is known (patent document 1), in which the frame supporting the display panel is composed of a first layer part and an elastic second layer part by two-color molding; and the display panel is fitted and fixed between a rear surface support part of the second layer part and a claw part of the second layer part that protrudes inside the frame.

Besides, also a display apparatus is known (patent document 2), in which a cushion rubber material is fixed to an inner circumferential surface of an outer frame; a display panel is fitted in the outer frame; and an outer circumferential surface of the display panel is pressurized against the cushion rubber material.

And, also a liquid crystal display apparatus is known (patent document 3), in which a resin spacer formed of an elastic thin resin is integrally formed with an inner surface of a metal frame that has a frame-shaped side wall; a light guide plate and a liquid crystal display panel are fitted in the metal frame; and the liquid crystal display panel is held by means of the elasticity of the resin spacer.

Further, also a display apparatus is known (patent document 4), in which a concave or a convex is disposed on a side surface of a board of a display panel; a convex or a concave is disposed on an inner side surface of a frame body; the display panel is fitted in the frame body; and the concave or convex of the board is fitted in the convex or concave of the frame body.

Besides, also a planar panel display apparatus is known (patent document 5), in which a display panel and a backlight unit are held between a front case and a rear case; a side wall inner surface of the front case is provided with a positioning protrusion; and an edge of the display panel is positioned by means of the positioning protrusion.

### Citation List

### Patent Literature

PLT1: JP-A-2009-109733
PLT2: JP-A-2008-233217
PLT3: JP-A-2003-202550
PLT4: JP-A-2002-328623
PLT5: JP-A-2002-90710

### Summary of Invention

### Technical Problem

However, as to the conventional liquid crystal module of the type in which the above mold frame is disposed to support the liquid crystal display panel, the mold frame is expensive, and because the mold frame is used, the number of components and the assembly man-hours increase; accordingly, there is a problem that a cost increase is incurred.

In contrast to this, the display apparatus of the patent document 1 does not use the mold frame, but uses, as the frame that supports the display panel, the special frame which is composed of the first layer part and elastic second layer part by the two-color molding; accordingly, it is hard to achieve cost reduction. Besides, the display apparatus using such special frame is small-sized; accordingly, it is hard to apply the structure of the display apparatus of the patent document 1 to a large-screen liquid crystal module that is built in television sets and the like.

Likewise, also the display apparatus of the patent document 2 and the display apparatus of the patent document 3 do not use the mold frame, but use, as the outer frame, the special frame in which the cushion rubber material or the elastic resin spacer is integrally formed with the inner circumferential surface; accordingly, it is bard to achieve cost reduction. Besides, also the display apparatus using such special frame is small-sized; accordingly, it is hard to apply the structures of the display apparatuses of the patent documents 2 and 3 to a large-screen liquid crystal module.

Besides, also the display apparatuses of the patent documents 4 and patent document 5 do not use the mold frame, but because of the structure, also these display apparatuses are small-sized; accordingly, it is hard to apply them to a large-screen liquid crystal module

The present invention has been made under the above circumstances, and it is an object of the present invention is to provide a liquid crystal module that removes a mold frame which supports a liquid crystal display panel, reduces the number of components, improves the assembly work, and achieves cost reduction. Especially, it is an object of the present invention to provide a preferred technology for a large-screen liquid crystal module that is built in liquid crystal television sets and the like.

### Solution to Problem

To achieve the above object, a liquid crystal module according to the present invention has a structure that includes: a box-shaped rear frame; a backlight unit disposed inside the rear frame; a liquid crystal display panel disposed over the backlight unit; and a panel support part that is formed by bending inward an upper part of a side wall of the rear frame and supports an edge of the liquid crystal display panel. In the meantime, it is preferable that the box-shaped frame has a shallow box shape formed of a sheet metal. Besides, it is preferable that the panel support part is obtained by bending the upper part of the side wall of the rear frame at right angles.

In the liquid crystal module according to the present invention, it is preferable to employ a structure which further includes a cushion member interposed between the panel support part and the edge of the liquid crystal display panel.

Besides, in the liquid crystal module according to the present invention, it is preferable to employ a structure in which the panel support part is provided with a positioning protrusion that positions the liquid crystal display panel.

Besides, in the liquid crystal module according to the present invention, it is preferable to employ a structure in which one edge of the rear frame is not provided with a side wall; and the liquid crystal module further includes a side wall member that is mounted on the one edge and supports the edge of the liquid crystal display panel. In the meantime, by removing the one edge of the rear frame, it is possible to insert a light guide plate and the like, which compose the backlight unit, from the one edge into the inside of the rear frame. It is preferable that the side wall member, whose upper surface defines the panel support part, includes a structure that is formed of a sheet metal and has a C shape in section.

Besides, in the liquid crystal module according to the present invention, it is preferable that at least one of the panel support part and the side wall member is provide with a positioning protrusion that positions the liquid crystal display panel.

### Advantageous Effects of Invention

The liquid crystal module according to the present invention has the structure in which the panel support part is formed by bending inward the upper part of the side wall of the box-shaped rear frame, preferably the edge of the liquid crystal display panel is placed on the panel support part via the cushion material. And, according to this, the liquid crystal module according to the present invention removes the mold frame for supporting the panel that is built in the conventional liquid crystal module. Accordingly, the liquid crystal module according to the present invention is reduced in the number of components and the assembly man-hours and the cost of the mold frame is reducible because the mold frame is removed; therefore, cost reduction is achievable. Besides, the cushion material is preferably interposed between the panel support part and the liquid crystal display panel; accordingly, the liquid crystal display panel has no looseness, and it is possible to absorb and cushion an impact that is exerted from outside.

Besides, in the liquid crystal module according to the present invention, the one-edge side wall of the rear frame is removed; the light guide plate and the like of the backlight unit are inserted from the one edge into the inside of the rear frame; and the side wall member whose upper surface defines the panel support part is mounted on the one edge of the rear frame; accordingly, it is possible to easily perform the assembly work of the liquid crystal module.

And, the positioning protrusion for positioning the liquid crystal display panel is disposed on the panel support part of the rear frame and/or the panel support part of the side wall member; accordingly, it is possible to position with high accuracy the liquid crystal display panel placed on these panel support parts by means of the positioning protrusion.

### Brief Description of Drawings

[Fig. 1] is an exploded perspective view of a liquid crystal module according to an embodiment of the present invention.
[Fig. 2] is a front view of a liquid crystal module according to an embodiment of the present invention.
[Fig. 3] is a sectional view taken along an A-A line of Fig. 2.
[Fig. 4] is a sectional view taken along a B-B line of Fig. 2.

### Description of Embodiments

Hereinafter, embodiments of a liquid crystal module according to the present invention are described based on the drawings.

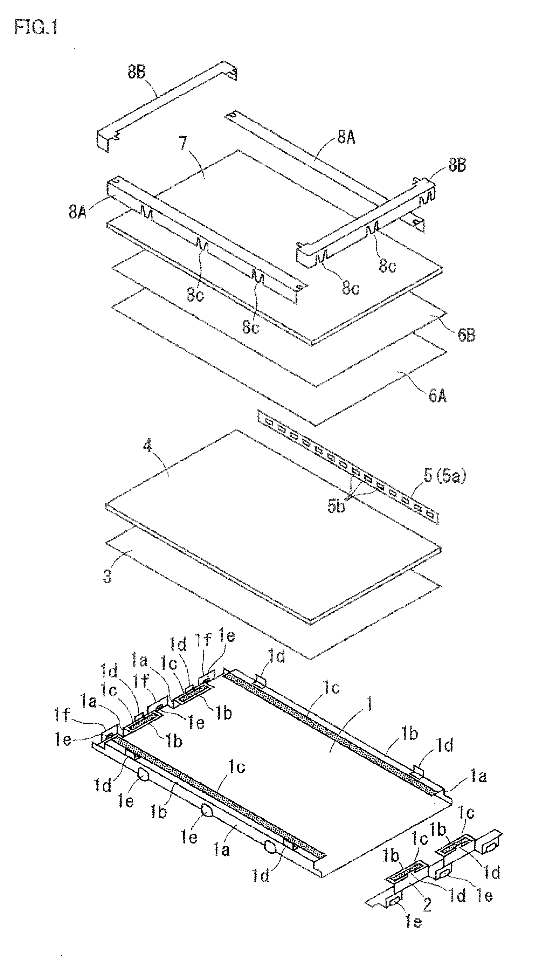

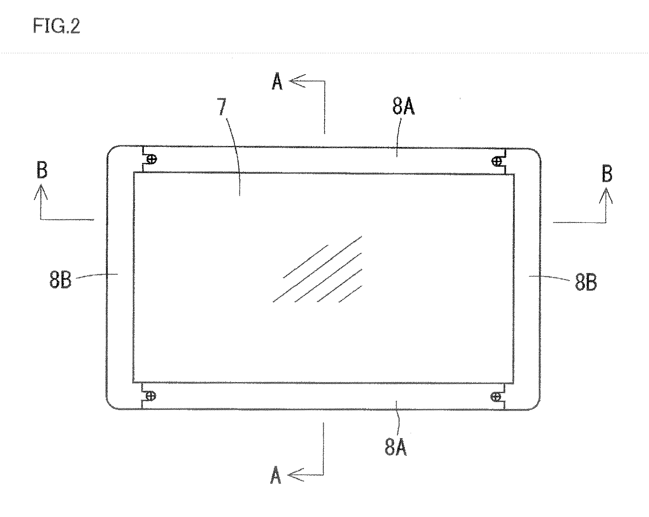

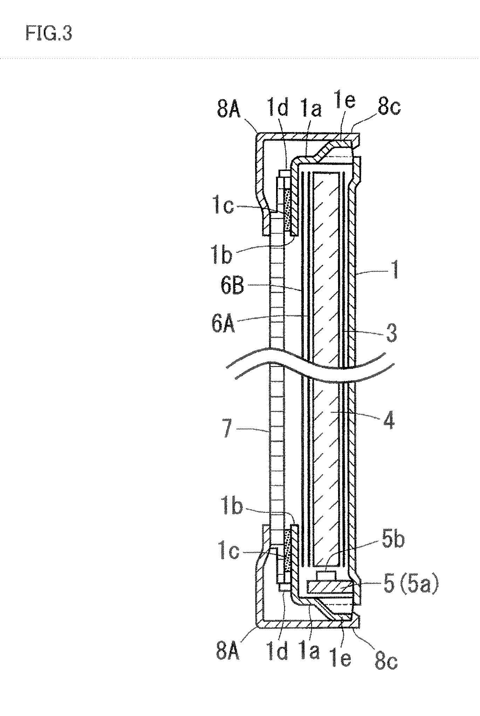

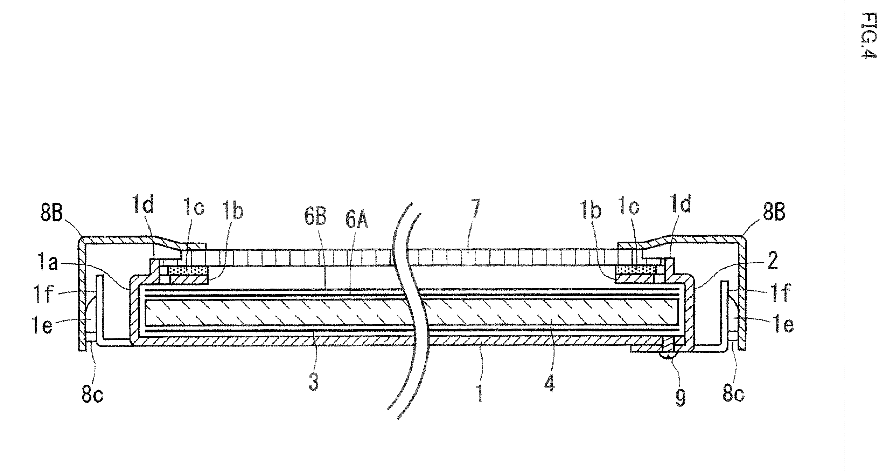

Fig. 1 is an exploded perspective view of a liquid crystal module according to an embodiment of the present invention, Fig. 2 is a front view of the liquid crystal module, Fig. 3 is a sectional view taken along an A-A line of Fig. 2, and Fig. 4 is a sectional view taken along a B-B line of Fig. 2.

The liquid crystal module according to this embodiment is a thin liquid crystal module that is built inside a cabinet of a thin liquid crystal television set. The thin liquid crystal module includes a so-called backlight unit of edge light type that is composed of a light guide plate and an LED bar. The liquid crystal module according to the embodiment is, as shown in Fig. 1, assembled of main components such as a rear frame 1, a side wall member 2, a reflection sheet 3, a light guide plate 4, an LED bar 5, optical sheets 6A, 6B, a liquid crystal display panel 7, bezels 8A, 8B and the like.

The rear frame 1 is a shallow box-shaped frame formed of a sheet metal and a side wall (right-edge side wall in Fig. 1, 4) of one edge is not formed. As described later, a side wall member 2 is mounted on the one edge of the rear frame 1 where the side wall is not formed.

As shown in Fig. 1, Fig. 3 and Fig. 4, as to each side wall 1a of the other three edges of the rear frame 1, its upper part is bent inward at right angles, whereby a panel supporter part 1b is formed. A tape-shaped cushion material 1c is attached to an upper part of each panel support part 1b. And, each panel support part 1b is provided, by cutting and raising, with a plurality of positioning protrusions 1d that position the liquid crystal display panel 7. As the cushion material 1c, for example, an elastic soft synthetic resin, synthetic rubber, a tape formed of a foam of these and the like are preferably used.

As to the rear frame 1 according to this embodiment, upper parts of the side walls 1a of long edges (upper edge and lower edge) opposing each other are bent inward continuously over the substantially entire length. On the other hand, a short edge (left edge) is provided with engagement latches 1e protruding outward for fixing the bezel 8b described later at both end parts and a central part of the short edge. Because of this, at the short edge (left edge), two divided panel support parts 1b are formed by bending inward the upper parts only of the side walls 1a that are disposed between the parts where these engagement latches 1e are formed. This engagement latch 1e of the short edge (left edge) is formed, by cutting and raising, on an elevated wall If of a part that is extended outward from the side wall 1a. On the other hand, the engagement latch 1e of the long edge (upper edge and lower edge) is formed on the side wall 1a itself by cutting and raising; accordingly, as described above, the upper part of the side wall 1a of the long edge (upper edge and lower edge) is bent inward continuously over the substantially entire length, whereby the panel support part 1b is formed.

The side wall member 2 mounted on the short edge (right edge) where there is no side wall of the rear frame 1 has a C shape in section as shown in Fig. 4, and as shown in Fig. 1, has a shape symmetrical with the side wall shape of the opposite short edge (left edge) of the rear frame 1. In other words, the elevated walls 1f of the parts that are extended outward from both ends and central part of the side wall member 2 are each provided with the engagement latch 1e for fixing the bezel 8B. And, the two divided panel support parts 1b are formed by bending inward the upper parts only of the side walls that are disposed between the parts where the engagement latches 1e are formed. Besides, the panel support part 1b is provided, by cutting and raising, with the same positioning protrusion 1d as the positioning protrusion described above, further, the same cushion material 1c as the cushion material described above is attached.

The backlight unit of the edge light type is disposed in an inside of the rear frame 1. This backlight unit is composed of: the light guide plate 4 formed of a transparent synthetic resin; the LED bar 5 disposed along an end surface of the light guide plate 4; the reflection sheet 3 stacked on a lower surface (rear surface) of the light guide plate 4; and the optical sheets 6A, 6B stacked on a upper surface (front surface) of the light guide plate 4. For example, as the optical sheet A, a light diffusion sheet is used, while as the optical sheet B, a prism sheet is used. The LED bar 5 is, as shown in Fig. 1 and Fig. 3, formed by arranging LED light sources 5b in a line as light sources at a predetermined interval on one surface of a belt-shaped board 5a. The LED bar 5 is disposed along an end surface of a lower edge of the light guide plate 4 and fixed to the side wall 1a of the rear frame 1.

In the meantime, the LED bar 5 may be disposed along the end surface of one or both of the upper and lower long edges of the light guide plate 4. However, the structure, in which the LED bar 5 is disposed along the end surface of the lower edge of the light guide plate 4 as in the present embodiment, is preferable because there is an advantage that an ascending air current occurs because of heat from the LED light source 5b to improve ventilation inside the liquid crystal module and prevent an excessive temperature rise.

The light guide plate 4 of the backlight unit is inserted into the inside of the rear frame 1 from the open part, that is, the right edge of the rear frame 1 where the side wall is not formed. The LED bar 5 can be disposed into the inside of the rear frame 1 from above (front side) the rear frame 1, besides, also the sheets 3, 6A and 6 can be disposed into the inside from above the rear frame 1 by bending and deforming them. The light guide plate 4 cannot be bent and deformed; accordingly, as described above, the light guide plate 4 is inserted into the inside of the rear frame 1 from the open part, that is, the right edge of the rear frame 1 where the side wall is not formed and disposed. In the meantime, it goes without saying that the sheets 3, 6A and 6B may be inserted inside together with the light guide plate 4 from the open part, that is, the right edge of the rear frame 1 and disposed.

As described above, after the light guide plate 4 of the backlight unit is inserted into the inside of the rear frame 4 and disposed, or after the entire backlight unit is inserted into the inside of the rear frame 1 and disposed, as shown in Fig. 4, the side wall member 2 having the C shape in section is mounted on the right edge of the rear frame 1 where the side wall is not formed. The mounting of the side wall member 2 may be performed by fixing a bottom plate part of the side wall member 2 by means of a screw 9. As decribed above, after at least the light guide plate 4 of the backlight unit is inserted and disposed, the side wall member 2 is mounted; accordingly, there is an advantage that it is possible to easily perform the assembly work of the liquid crystal module.

The four circumferential edges of the liquid crystal display panel 7 are placed, via the cushion material 1c, on the panel support parts 1b of the three edges of the rear frame 1 and on the panel support part 1b of the side wall member 2. The four circumferential edges of the liquid crystal display panel 7 are covered by the four long and short bezels 8A, 8A, 8B and 8B that are framed into a rectangular shape. As shown in Fig. 3 and Fig. 4, the four circumferential end surfaces of the liquid crystal display panel 4 butt the positioning protrusions 1d that are respectively formed on the panel support part 1b of the rear frame 1 and on the panel support part 1b of the side wall member 2. And the liquid crystal display panel 4 is positioned with high accuracy and disposed with no looseness by means of the cushion material 1c. Because of this, an impact exerted from outside the liquid crystal module is absorbed and cushioned by the cushion material I c.

The side wall surfaces of the bezels 8A and 8B are each provided with a plurality of engagement claws 8c (three claws each in the figure) as shown in Fig. 1. As shown in Fig. 3 and Fig. 4, by engaging these engagement claws 8c with the engagement latches 1e of the rear frame 1 and side wall member 2, the bezels 8A and 8B are fixed.

In the meantime, although not shown, at the edge of the liquid crystal display panel 7, an X board and a Y board are disposed via a chip-on film on which a source driver IC chip is mounted or a chip-on film on which a gate driver IC chip is mounted, and these boards are fixed to the lower surface (rear surface) of the rear frame and connected to a main board.

In the liquid crystal module according to the present embodiment, the upper parts of the three-edge side walls 1a of the shallow box-shaped rear frame 1 formed of a sheet metal are bent inward at right angles to form the panel support parts 1b, and the panel support part 1b is formed on the side wall member 2 that is mounted later on the remaining one edge that has no side wall. And, the edges of the liquid crystal display panel 7 are placed on the panel support parts 1b via the cushion material 1c, whereby the mold frame which is built in the conventional liquid crystal module to support the panel is removed. Because of this, the liquid crystal module according to the present embodiment is reduced in the number of components and the man-hours because the mold frame is removed and the cost of the mold frame can be cut; accordingly, the cost reduction is achievable.

In addition, in the liquid crystal module according to the present embodiment, the side wall member is mountable later on the one edge of the rear frame 1 where the side wall is not formed, and at least the light guide plate 4 of the backlight unit of the edge light type is insertable from the open part of the one edge. Because of this, it is possible to easily perform the assembly work of the liquid crystal module according to the present embodiment.

In the meantime, the present invention is also applicable to a liquid crystal module that employs a backlight unit of direct type in which a cold-cathode tube lamp as the light source is disposed behind the liquid crystal display panel. In this case, all the upper parts of the four-edge side walls 1a of the rear frame 1 are bent to form the panel support parts 1b, and the cold-cathode tube lamp of the backlight unit and the other components are inserted inside from the front side of the rear frame 1 and disposed.

### Reference Signs List

- 1: rear frame
- 1a: side wall
- 1b: panel support part
- 1c: cushion material
- 1d: positioning protrusion
- 1e: engagement latch
- 2: side wall member
- 4: light guide plate of backlight unit
- 5: LED bar of backlight unit
- 7: liquid crystal display panel
- 8A, 8B: bezels

## Claims

1. A liquid crystal module comprising:
a box-shaped rear frame;
a backlight unit disposed inside the rear frame;
a liquid crystal display panel disposed over the backlight unit; and
a panel support part that is formed by bending inward an upper part of a side wall of the rear frame and supports an edge of the liquid crystal display panel.

2. The liquid crystal module according to claim 1, further comprising
a cushion member interposed between the panel support part and the edge of the liquid crystal display panel.

3. The liquid crystal module according to claim 1 or 2, wherein
the panel support part is provided with a positioning protrusion that positions the liquid crystal display panel.

4. The liquid crystal module according to claim 1 or 2, wherein
one edge of the rear frame is not provided with a side wall; and
the liquid crystal module further comprises a side wall member that is mounted on the one edge and supports the edge of the liquid crystal display panel.

5. The liquid crystal module according to claim 4, wherein
at least one of the panel support part and the side wall member is provide with a positioning protrusion that positions the liquid crystal display panel.
